(19) Europäisches Patentamt
European Patent Office
Office européen des brevets

(11) EP 1 243 766 B1

(12) EUROPEAN PATENT SPECIFICATION

(45) Date of publication and mention of the grant of the patent:
**23.07.2008 Bulletin 2008/30**

(51) Int Cl.:
***F01N 3/08*** *(2006.01)* ***F01N 3/20*** *(2006.01)*
***B01D 53/94*** *(2006.01)* ***F02D 41/02*** *(2006.01)*

(21) Application number: **02006277.4**

(22) Date of filing: **20.03.2002**

# (54) Exhaust gas purification device of internal combustion engine

Abgasreinigungsvorrichtung einer Brennkraftmaschine

Dispositif de purification des gaz d'échappement d'un moteur à combustion interne

(84) Designated Contracting States:
**DE FR GB**

(30) Priority: **21.03.2001 JP 2001080805**
**29.08.2001 JP 2001259060**

(43) Date of publication of application:
**25.09.2002 Bulletin 2002/39**

(73) Proprietor: **NISSAN MOTOR CO., LTD.**
**Yokohama-shi, Kanagawa (JP)**

(72) Inventors:
- **Tsuchida, Hirofumi**
**Yokosuka-shi,**
**Kanagawa (JP)**
- **Shiino, Toshikazu**
**Chigasaki-shi,**
**Kanagawa (JP)**
- **Hotta, Isamu**
**Yokosuka-shi,**
**Kanagawa (JP)**
- **Fukuda, Takashi**
**Yokohama-shi,**
**Kanagawa (JP)**

(74) Representative: **Grünecker, Kinkeldey,**
**Stockmair & Schwanhäusser**
**Anwaltssozietät**
**Leopoldstrasse 4**
**80802 München (DE)**

(56) References cited:
**EP-A- 0 774 054**
**EP-A- 0 862 941**
**WO-A-99/49958**
**JP-A- 7 102 952**
**JP-A- 10 077 831**
**JP-A- 2000 345 832**
**US-A- 6 021 638**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

FIELD OF THE INVENTION

This invention relates to purification of nitrogen oxides discharged from an internal combustion engine of, for example, an automobile.

BACKGROUND OF THE INVENTION

Tokkai Hei 08-6105 published by the Japanese Patent Office in 1996 discloses an exhaust gas purification device wherein nitrogen oxides (NOx) discharged by a lean burn engine of an automobile at low temperature are trapped by a NOx trap catalyst, and the NOx released by the NOx trap catalyst as the exhaust gas temperature rises is reduced by reducing agents such as hydrocarbons (HC) or carbon monoxide (CO) when the air-fuel ratio of the engine becomes rich. For this purpose, US Patent 5,552,129 discloses a low temperature NOx trap catalyst comprising a zeolite as an NOx trapping agent (hereafter, abbreviated as zeolite catalyst).

In the zeolite catalyst, moisture is trapped together with NOx, and when the trapped moisture amount increases, the NOx trapping performance decreases. To prevent a drop in the NOx trapping performance of the zeolite catalyst, Tokkai Hei 1-155934 published by the Japanese Patent Office in 1989 discloses a device wherein the exhaust gas of a vehicle in a tunnel is led to a moisture-absorbing agent such as silica gel, and is treated by a zeolite catalyst after removing moisture from the exhaust gas. In this way, by removing moisture from the low temperature exhaust gas the NOx trapping performance of the zeolite catalyst improves.

When the temperature of the zeolite catalyst rises above a fixed temperature, the trapped NOx is released. Thus, in this device, the zeolite catalyst which trapped NOx is heated to make it release NOx. Also, the NOx released from the zeolite catalyst is reduced to harmless nitrogen gas by reacting it with ammonia ($NH_3$). Due to release of NOx, the zeolite catalyst is restored to a state in which it can again trap NOx.

An exhaust purification device according to the preamble of claim 1 is known from EP 0 774 054 B1. This prior art discloses an exhaust purification device which is connected to an engine in order to combat air pollution. The exhaust purification device contains a so called three-way catalyst which, among others, reduces nitrogen oxides in the exhaust gas to nitrogen. Further, the device contains a nitrogen oxide trap catalyst (hydrocarbon trap) which has a trapping effect on nitrogen oxides so that they are trapped at lower temperatures and released at higher temperatures. Said trap catalyst is preferably pre-dried or kept dry before starting the engine. Since the presence of water adversely affects the operation of the nitrogen oxide trap catalyst, a so called water trap to trap water is mounted upstream of said hydrocarbon trap.

SUMMARY OF THE INVENTION

Even when the technique of Tokkai Hei 1-155934 is applied to an NOx trap catalyst mounted on a vehicle, although the NOx trapping performance increases, the following problems arise regarding the treatment of the trapped NOx.

In order that reducing agents such as hydrocarbons (HC) and carbon monoxide (CO), which are discharged due to the richness of the air- fuel ratio of the engine, can reduce NOx, a high temperature of at least 200°C and preferably 300°C is required. However, if the trapped moisture amount is small, the zeolite catalyst starts to release NOx at a lower temperature than this temperature range. As a result, a time lag occurs between the start of NOx release and the start of NOx reduction, and during this time lag, NOx is discharged to the outside air without being reduced.

It is therefore an object of this invention to increase the NOx trap amount of a vehicle-mounted NOx trap catalyst while preventing the fall of the NOx release start temperature.

In order to achieve the above object, this invention provides an exhaust purification device for purifying exhaust gas discharged from an internal combustion engine to an exhaust passage as defined in claim 1. Preferred embodiments of the inventive device are subject to the dependent claims.

The details as well as other features and advantages of this invention are set forth in the remainder of the specification and are shown in the accompanying drawings.

BRIEF DESCRIPTION OF THE DRAWINGS

Fig. 1 is a diagram showing a relation between moisture content in exhaust gas during a NOx trapping process by a zeolite catalyst, and an NOx release rate of the zeolite catalyst at a temperature lower than 200°C, according to an experiment by the inventors.

Fig. 2 is a schematic diagram of an engine exhaust gas purification device according to this invention.

Fig. 3 is a flowchart which describes an air-fuel ratio control routine performed by a controller according to this invention.

Fig. 4 is a schematic diagram of the exhaust gas purification device according to a second embodiment of this invention.

Fig. 5 is a diagram describing a relation between an exhaust gas flow rate and a moisture trap rate of a zeolite catalyst according to the second embodiment of this invention.

Fig. 6 is a schematic diagram of an exhaust purification device according to a third embodiment of this invention.

DESCRIPTION OF THE PREFERRED EMBODIMENTS

Regarding catalysts comprising a trapping agent in which a noble metal is supported only on ceria ($CeO_2$) (hereafter, abbreviated as ceria base catalyst) and low temperature NOx trap catalysts comprising zeolite, the inventors experimentally discovered the following correlation between the moisture content of the exhaust gas and the release characteristics of the trapped NOx. Fig. 1 of the drawings shows the results.

In Fig. 1, the vertical axis of the diagram shows the NOx release rate of the catalyst, i.e., the rate of NOx release amount relative to the trapped NOx amount, at a temperature lower than 200°C. The horizontal axis shows the moisture content of the exhaust gas during the NOx trapping process by the catalyst.

According to this experimental result, when the moisture content of the exhaust gas in which NOx was trapped by the catalyst is zero, the catalyst releases more than half of the trapped NOx below 200°C. On the other hand, when the exhaust gas in which NOx was trapped by the catalyst contains an appreciable amount of moisture, the catalyst discharges only a small amount of the trapped NOx below 200°C.

The exhaust purification device according to this invention, which is described hereafter, is based on this experimental result.

Referring to Fig. 2, an internal combustion engine 1 of a vehicle comprises a direct injection type gasoline engine which directly injects fuel into a combustion chamber 4 from a fuel injector 5. This is a so-called lean burn engine wherein, from the temperature conditions when the cooling water temperature is about 25°C, which is immediately after cold start, to the partial engine load region, combustion is performed under a lean air-fuel ratio. To reduce fuel consumption, the engine operates at a lean air-fuel ratio of approximately 25 even under such low temperature conditions.

The engine 1 comprises an intake passage 2 and an exhaust passage 12. Air aspirated from the intake passage 2 is supplied to the combustion chamber 4, and by injecting fuel from the fuel injector 5 into the air, air-fuel mixture is generated in the combustion chamber 4. The air-fuel mixture is burnt by ignition by a spark plug 6 provided in the combustion chamber 4, and a piston 20 is then pushed down by the combustion pressure. The exhaust gas after combustion is discharged from the exhaust passage 12. The intake air amount in the intake passage 2 is adjusted by an electronic throttle 3.

The opening of the electronic throttle 3, the fuel injection by the fuel injector 5 and the ignition of the air-fuel mixture by the spark plug 6 are respectively controlled by signals output from a controller 7.

A moisture trap 14, a low temperature NOx trap catalyst 13 and an ordinary NOx trap catalyst 14 to purify the exhaust gas are installed in this sequence in the exhaust passage 12.

A zeolite catalyst or ceria base catalyst is used in the low temperature NOx trap catalyst 13.

The zeolite catalyst comprises a zeolite coated on a honeycomb substrate. The zeolite may be β-zeolite, A-zeolite, X-zeolite, Y-zeolite, ZSM-5, USY, mordenite and ferrierite which can trap NOx at low temperatures.

The ceria base catalyst is a catalyst wherein a powder of a trapping agent comprising one or more noble metals selected from platinum (Pt), palladium (Pd), rhodium (Rh), ruthenium (Ru), iridium (Ir), osmium (Os) or another noble metal, deposited only on ceria (CeO2), is coated on a substrate having a honeycomb cross-section. The powder of the trapping agent may be directly coated on the substrate, or a wash coat of alumina may be first coated on the substrate, and the powder of the trapping agent coated thereupon. Further, a mixture of the trapping agent and alumina may also be coated on the substrate.

The low temperature NOx trap catalyst 13 can trap NOx in the exhaust gas even at a catalyst temperature below 100°C. The NOx amount which can be trapped increases the lower the moisture content in the exhaust gas.

On the other hand, the release start temperature of the trapped NOx lowers the lower the moisture content in the exhaust gas during the trapping process, as described above.

When a zeolite catalyst is used for the low temperature NOx trap catalyst 13, it is preferred to coat the upper layer of the catalyst with alumina supporting a noble metal such as platinum (Pt), palladium (Pd) or rhodium (Rh). This treatment promotes reduction of the discharged NOx by reducing agents when the catalyst temperature rises and NOx is released. In other words, it enhances its performance as a reduction catalyst. Herein, the term reducing agents means HC, CO, hydrogen ($H_2$) contained in the exhaust, and HC trapped by the low temperature NOx trap catalyst 13.

When a ceria base catalyst is used for the low temperature NOx trap catalyst 13, the ceria base catalyst already contains a noble metal component, so there is no need to apply this treatment again.

The cell density in the cross-section of the honeycomb substrate is set to 300-600 cells per square inch.

Silica gel, active carbon, part of the zeolite or alumina may be used for the moisture trap 14. From the viewpoint of durability to exhaust gas, it is preferred to use zeolite or alumina in this position. According to this embodiment, the moisture trap 14 comprises A- zeolite, which has excellent moisture absorption properties at low temperature coated on a honeycomb substrate. The cell density in the cross-section of the substrate is set to 300-600 cells per square inch.

A bypass passage 14A is provided in the center of the moisture trap 14. The exhaust gas flowing down the bypass passage 14A flows directly into the low temperature NOx trap catalyst 13 without moisture being trapped by the moisture trap 14. The cross-sectional surface area of the bypass passage 14A is set so that 1/5 to 1/12 of the total exhaust gas amount flows down the bypass passage 14A.

According to this embodiment, the cross-sectional surface area is set so that 1/7 of the total exhaust gas amount flows through the bypass passage 14A. The flow of exhaust in the moisture trap 14 differs in the center part and peripheral part, and the cross -sectional surface area of the bypass passage 14A is set taking account of this characteristic.

However, the bypass passage 14A is not necessarily placed at the center of the moisture trap 14. The proportion by which moisture in the exhaust gas decreases due to the moisture trap 14 varies according to the amount of exhaust gas flowing through the bypass passage 14A.

The ordinary NOx trap catalyst 15 comprises a catalyst component coated on a honeycomb substrate. The catalyst component comprises a three-way catalyst component at least one of the noble metals platinum (Pt), palladium (Pd) or rhodium (Rh) and at least one component selected from alkaline earths such as barium (Ba) and alkali metals such as cesium (Cs)

This type of ordinary NOx trap catalyst is disclosed in Tokkai Hei 7-166913 published by the Japanese Patent Office in 1995.

The ordinary NOx catalyst is activated at a temperature of at least 200°C. In an activated state, the ordinary NOx catalyst traps NOx in exhaust gas discharged from the engine 1 due to combustion of an air-fuel mixture having an air-fuel ratio leaner than the stoichiometric air-fuel ratio. It releases the trapped NOx when combustion of an air-fuel mixture having an air-fuel ratio richer than the stoichiometric air-fuel ratio is performed in the engine 1, and promotes reduction of NOx by the reducing agents such as HC and CO in the exhaust gas. However, this function of the ordinary NOx trap catalyst is not active when the catalyst temperature is below 200°C.

As stated above, the engine 1 is set to run under a lean air-fuel ratio from the low temperature condition. In the temperature range above 200°C, the NOx in the exhaust gas is processed by the ordinary NOx trap catalyst 15, and in the low temperature range below 200°C, the NOx in the exhaust gas is processed by a combination of the moisture trap 14 and the low temperature NOx trap catalyst 13.

Due to the characteristics of the low temperature NOx trap catalyst 13 described earlier, when the moisture content of the exhaust gas is high during trapping of NOx, the NOx trapping capacity becomes saturated before the ordinary NOx trap catalyst 15 is activated. If the moisture content of the exhaust gas is lowered during trapping of NOx, the NOx trapping capacity of the low temperature NOx trap catalyst 13 rises, but if the moisture content falls too much, the NOx release start temperature drops, and release of NOx starts before the ordinary NOx trap catalyst 15 has reached the activation temperature of 200°C. If the NOx trapping capacity of the low temperature NOx trap catalyst 13 becomes saturated before the ordinary NOx trap catalyst 15 is activated, or if the low temperature NOx trap catalyst 13 starts to release NOx before the ordinary NOx trap catalyst 15 is activated, NOx will be discharged into the atmosphere without being purified.

If a large catalyst which has a large NOx trapping capacity is used without lowering the moisture content of exhaust gas, the problem does not arise, but there is a limitation in the size of a vehicle-mounted catalyst in view of the space and cost required for the installation.

In this exhaust purification device, the moisture content of the exhaust gas when the low temperature NOx trap catalyst 13 traps NOx is reduced to approximately one percent (1%). Considering the NOx release start temperature characteristics in Fig. 1, this moisture content is the optimum tolerance point at which the two criteria of NOx trapping capacity and release start temperature required of the low temperature NOx trap catalyst 13 are satisfied, and the performance of the low temperature NOx trap catalyst 13 is optimized at this moisture content.

The low temperature NOx trap catalyst 13 and the ordinary NOx trap catalyst 15 are both regenerated by releasing trapped NOx, and become able to trap NOx again. The controller 7 respectively regenerates these catalysts by controlling the opening of the electronic throttle 3 and the fuel injection amount of the fuel injector 5.

To perform these controls, signals are input to the controller 7 from an air flow meter 8 installed upstream of the electronic throttle 3 which detects an intake air amount *Qa* of the intake passage 2, an accelerator depression sensor 9 which detects a depression amount *Apo* of an accelerator pedal with which the vehicle is provided, a crank angle sensor 10 which detects a rotation speed *Ne* of the engine 1, a water temperature sensor 11 which detects a cooling water temperature *Tw* of the engine 1 and a temperature sensor 16 which detects a temperature *Tcat* of the low temperature NOx trap catalyst 13.

The controller 7 comprises a microcomputer with a central processing unit (CPU), a read-only memory (ROM), a random access memory (RAM) and an input/output interface (I/O interface). The controller 7 may also comprise plural microcomputers.

Before describing the air-fuel ratio control performed by the controller 7 to regenerate the catalyst, a summary of the air-fuel ratio control normally performed by the controller 7 will be given.

The controller 7 calculates a required torque *L* required by the engine 1 based on the accelerator pedal depression amount *Apo.* This required torque *L* is also a value which represents the load of the engine 1.

Based on the required torque *L*, the engine rotation speed *Ne* and the engine cooling water temperature *Tw*, the controller 7 calculates a target equivalence ratio *TFBYA* of the air-fuel mixture which is burnt. The equivalence ratio is equal to the inverse of an excess-air factor used by the diesel engine, and the equivalence ratio is 1.0 at the stoichiometric air-fuel ratio. When the equivalence ratio is less than 1.0, it corresponds to a lean air-fuel ratio, and when it is larger than 1.0, it corresponds to a rich air-fuel ratio.

The controller 7 adjusts the opening of the electronic throttle 3 so as to obtain an intake air amount corresponding to the target equivalence ratio *TFBYA.* Specifically, for the same required torque *L,* the opening of the electronic throttle 3 increases the leaner the target equivalence ratio *TFBYA.*

The controller 7 also calculates a basic fuel injection amount *Tp* by the following equation (1) based on the actual intake air amount *Qa* detected by the air flow meter 8 and the engine rotation speed *Ne.*

$$Tp = K \cdot Qa / Ne \qquad (1)$$

where, *K* = constant.

A final fuel injection amount *Ti* is then calculated by the following equation (2) using the basic fuel injection amount *TP* and the target equivalence ratio *TFBYA.*

$$Ti = Tp \cdot TFBYA \cdot COEF \qquad (2)$$

where, *COEF = various* correction coefficients.

Thus, by outputting a pulse signal having a width corresponding to the final fuel injection amount *Ti* computed as described above to the fuel injector 5, the controller 7 controls the fuel injection amount of the fuel injector 5 to the final fuel injection amount *Ti.*

Next, the air-fuel ratio control routine performed by the controller 7 to regenerate the catalyst will be described.

This routine is performed at an interval of ten milliseconds during the running of the engine 1.

First, in a step S1, the controller 7 reads a cooling water temperature *Tw* of the engine 1.

In a following step S2, it is determined whether or not the cooling water temperature *Tw* is higher than a predetermined temperature *TwL.* The predetermined temperature *TwL* is a temperature for determining whether or not it is possible to run the engine 1 under a lean air-fuel ratio, and here, the predetermined temperature *TwL* is set to 25°C.

When the cooling water temperature *Tw* is not higher than the predetermined temperature *TwL*, it shows that the temperature of the engine 1 is not suitable for running under a lean air-fuel ratio. In this case, the routine proceeds to a step S9. In the step S9, the correction coefficient *COEF* of the equation (2) is set based on the cooling water temperature *Tw* in order to maintain stable combustion of the air-fuel mixture supplied to the engine 1. The air-fuel ratio in this case is the stoichiometric air-fuel ratio or a rich air-fuel ratio. After this processing, the controller 7 terminates the routine.

When the cooling water 10 temperature *Tw* is higher than the predetermined temperature *TwL,* it shows that the engine 1 is able to run under a lean air-fuel ratio. In this case, in a step S3, the controller 7 reads the catalyst temperature *Tcat* of the low temperature NOx trap catalyst 13.

Next, in a step S4, the catalyst temperature *Tcat* is compared with a predetermined temperature *TcatL.* The predetermined temperature *TcatL* is the temperature at which the low temperature NOx trap catalyst 13 starts to release the trapped NOx. Here, the predetermined temperature *TcatL* is set to 200°C. However, the temperature at which NOx starts to be released varies slightly depending on the material of the low temperature NOx trap catalyst 13, so it is desirable to determine the predetermined temperature *TcatL* experimentally.

When the catalyst temperature *Tcat* is not higher than the predetermined temperature *TcatL*, it shows that the low temperature NOx trap catalyst 13 has not started to release the trapped NOx. In this case, the routine proceeds to a step S5. In the step S5, the controller 7 controls the fuel injection amount so that the running of the engine 1 is performed under a lean air-fuel ratio. Specifically, the target air-fuel ratio is set to 25, and a duty signal corresponding to the final fuel injection amount *Ti* calculated using the corresponding target equivalence ratio *TFBYA* is output to the fuel injector 5. After this processing, the controller 7 terminates the routine.

In the step S4, when the catalyst temperature *Tcat* is higher than the predetermined temperature *TcatL*, it shows that the low temperature NOx trap catalyst 13 has started to release the trapped NOx. In this case, the routine proceeds to a step S6.

In the step S6, the controller 7 determines whether or not an elapsed time from when the catalyst temperature *Tcat* exceeds the predetermined temperature *TcatL*, has reached a predetermined time. This predetermined time corresponds to the time required for the low temperature NOx trap catalyst 13 to release the trapped NOx. The predetermined time depends on the NOx trap capacity and catalyst material of the low temperature NOx trap catalyst 13, and is determined previously by experiment.

In the step S6, when the elapsed time from when the catalyst temperature *Tcat* exceeds the predetermined temperature *TcatL,* has not reached the predetermined time, it shows that the low temperature NOx trap catalyst 13 has not finished the release of the trapped NOx. In this case, in a step S7, the controller 7 controls the fuel injection amount so that the running of the engine 1 is performed under a rich air-fuel ratio. Specifically, the target air-fuel ratio is set to 13, and a duty signal corresponding to the final injection amount *Ti* calculated using the corresponding target equivalence ratio *TFBYA* is output to the fuel injector 5. After this processing, the controller 7 terminates the routine.

In the step S6, when it is determined that the elapsed time from when the catalyst temperature *Tcat* exceeds the predetermined temperature *TcatL*, has reached the predetermined time, it shows that the low temperature NOx trap catalyst 13 has finished the release of the trapped NOx. It also shows that the ordinary NOx trap catalyst 15 is fully activated, and is in a state where it can treat the NOx in the exhaust gas.

In this case, in a step S8, the controller 7 runs the engine 1 in such a way that the ordinary NOx trap catalyst 15 can function to treat NOx. Specifically, the engine 1 is run under a lean air-fuel ratio based on the engine rotation speed *Ne* and required torque *L*, and periodically runs the engine 1 under a rich air-fuel ratio to release and reduce NOx, and regenerate the ordinary NOx trap catalyst 15. The rich air-fuel ratio in this case is set to, for example, 11. After this processing, the controller 7 terminates the routine.

As a result of the above air-fuel ratio control performed by the controller 7, when the engine 1 performs a cold start from the ordinary temperature of 25°C, the engine 1 is run under a lean air-fuel ratio immediately after start-up. In this state, the moisture content of the exhaust gas discharged by the engine 1 is 7% on average. Most of this moisture is removed by the moisture trap 14, but part of the exhaust gas passes through the bypass passage 14A and flows into the low temperature NOx trap catalyst 13 still containing a little moisture. As described above, the cross-sectional surface area of the bypass passage 14A is set so that 1/7 of the total exhaust gas amount passes through the bypass passage 14A, and when it flows into the low temperature NOx trap catalyst 13, the average moisture content of the exhaust gas is 1%.

The low temperature NOx catalyst 13 traps both NOx and moisture in the exhaust gas flowing into it. At this time, the moisture content of the exhaust gas remains at 1%. In the case of this exhaust gas, the NOx trap capacity of the low temperature NOx trap catalyst 13 is much larger than for exhaust gas from which moisture has not been removed, and the trapping performance is maintained over a long period of time. The trapped NOx is released due to the subsequent temperature rise of the catalyst, but as shown in Fig. 1, the release rate of the trapped NOx that was trapped from exhaust gas containing 1% of moisture is small at a temperature below 200°C. Therefore, most of the trapped NOx is released after the catalyst temperature exceeds 200°C.

When the catalyst temperature exceeds 200°C, in the step S7, the controller 7 makes the air-fuel ratio rich. The NOx released from the low temperature NOx trap catalyst 13 is reduced by reducing components such as HC or CO contained in the exhaust gas from an air-fuel mixture burnt under a rich air-fuel ratio, or HC trapped by the low temperature NOx trap catalyst 13. At this time, the noble metal catalyst in the upper layer of the low temperature NOx trap catalyst 13 is activated, and reduction of NOx by the reducing components is promoted.

At this stage, the ordinary NOx trap catalyst 15 is also activated, and afterwards, the NOx discharged from the engine 1 is trapped by the ordinary NOx trap catalyst 15. Trapping of NOx and releasing/reducing of the trapped NOx by the ordinary NOx trap catalyst 15 are then repeated periodically by the air-fuel ratio control performed by the controller 7 in the step S8.

In this way, NOx processing performance during the time from when the engine 1 starts to when the ordinary NOx trap catalyst 15 is activated is optimized by the combination of the low temperature NOx trap catalyst 13 and the moisture trap 14, so the NOx discharge amount in the low temperature stage before the ordinary NOx trap catalyst 15 is activated is suppressed to an extremely low level.

According to this embodiment, the cross-sectional surface area of the bypass passage 14A of the moisture trap 14 is set so that the average moisture content of the exhaust gas flowing into the low temperature NOx trap catalyst 13 is 1%, but this value is not limited to 1%, preferable results being obtained if the average moisture content of the exhaust gas flowing into the low temperature NOx trap catalyst 13 lies within the range 0.7% to 1.3%. Thus according to the present invention the range is 0.7% to 1.3%.

According to this embodiment, the ordinary NOx trap catalyst 15 was installed downstream of the low temperature NOx trap catalyst 13, but it may also be installed upstream of the low temperature NOx catalyst 13. Further, the functions of the ordinary NOx trap catalyst may be incorporated into the low temperature NOx trap catalyst 13 by adding at least one type of component chosen from alkaline earths such as barium (Ba) or alkali metals such as cesium (Cs) to the noble metal catalyst in the upper layer of the low temperature NOx trap catalyst 13.

Next, referring to FIGs. 4 and 5, a second embodiment of this invention will be described.

According to this embodiment, the bypass passage is not provided in the moisture trap 14 shown in Fig. 4.

The cell density in the cross-section of the honeycomb substrate of the moisture trap 14 is reduced instead, compared to that of the first embodiment, to 100-200 per square inch.

Due to the lesser cell density of the moisture trap 14 in this embodiment, the moisture content of the exhaust gas can be adjusted to within the above preferred range.

Fig. 5 shows the result of examining the relation between the exhaust gas flow rate and the moisture trap rate by the moisture trap 14 in this embodiment.

The point A in the figure corresponds to the idle running state of the engine 1. In the idle running state, all the moisture in the exhaust gas is trapped by the moisture trap 14. The region B is a general ordinary running region including acceleration and deceleration of the engine 1. In this region, 80-90% of the water in the exhaust gas is trapped by the moisture trap 14.

When the engine starts at the ordinary temperature of 25°C, and runs at a lean air-fuel ratio around 25, if the average moisture content of the exhaust gas is 7%, effectively all of the water is removed by the moisture trap 14 in the idle running state immediately after start-up, and dry exhaust gas flows into the low temperature NOx trap catalyst 13. When the exhaust gas flow rate increases due to a subsequent acceleration operation, the moisture content of the exhaust gas flowing into the low temperature NOx trap catalyst 13 is approximately 1%.

In the idle running state, the load is small, so the NOx discharge amount is quite small. The NOx discharged in this state is trapped by the low temperature NOx trap catalyst 13. At this time, the moisture in the exhaust gas flowing into the low temperature NOx trap catalyst 13 is effectively zero, so approximately half of the trapped NOx is discharged from the low temperature NOx trap catalyst 13 before the temperature reaches 200°C. However, in the idle running state, as the NOx discharge amount is quite small, the NOx amount released from the low temperature NOx trap catalyst 13 below 200°C is also very small.

When the exhaust gas flowing into the low temperature NOx trap catalyst 13 in the idle running state is dry, the low temperature NOx trap catalyst 13 can maintain its NOx trapping performance even when the idle running state continues for a long time.

On the other hand, if the moisture content of the exhaust gas is high, the low temperature NOx trap catalyst 13 cannot maintain its NOx trapping performance for a long time because its NOx trapping capacity is reduced by the trapped moisture.

When acceleration operation of the engine 1 is performed from the idle running state, the exhaust gas flow rate increases to the region B. Due to the increasing load on the engine 1 as a result of the acceleration, the NOx amount discharged from the engine 1 increases. The NOx in the exhaust gas in this state is also trapped by the low temperature NOx trap catalyst 13, but as the exhaust gas flowing into the low temperature NOx trap catalyst 13 contains approximately 1% of moisture, most of the trapped NOx is not released until the catalyst temperature reaches 200°C.

Summarizing the above, the ability of the low temperature NOx trap catalyst 13 to retain the small amount of NOx released under low load is small, but most of the NOx released in large amounts due to increase of load can be retained until the catalyst temperature reaches 200°C. As a result, the NOx processing ability in the low temperature state is largely improved compared to the case where moisture is not removed from the exhaust gas.

Next, a third embodiment of this invention will be described referring to Fig. 6.

According to this embodiment, the moisture trap 14 is omitted, as shown in Fig. 6, and instead, a bypass passage 13A is installed in the low temperature NOx trap catalyst 13. The remaining features of the construction are identical to those of the first embodiment.

Part of the exhaust gas discharged from the engine 1 passes through the bypass passage 13A, and flows out without passing through the low temperature NOx trap catalyst 13. As a result, the moisture amount flowing into the low temperature NOx trap catalyst 13 decreases.

For example, if the bypass passage 13A discharges half of the exhaust gas amount, the moisture flowing into the low temperature NOx trap catalyst 13 is reduced by half. The NOx trapping performance at low temperature of the low temperature NOx trap catalyst 13 is quickly saturated due to trapping of moisture. Hence, if the moisture flowing into the low temperature NOx trap catalyst 13 is reduced by half, the time during which the low temperature NOx trap catalyst 13 can trap NOx is approximately doubled.

This fact leads to the following result regarding the NOx output characteristics of the engine 1. The NOx discharge amount of the engine 1 increases sharply when the combustion temperature of the air-fuel mixture rises. Immediately after start-up of the engine 1, the temperature of the combustion chamber 4 is low and the NOx discharge amount is also small, but the NOx discharge amount increases as the engine 1 warms up.

Therefore, the increase in the trapping period of the low temperature NOx trap catalyst 13 means that the NOx amount which can be trapped by the low temperature NOx trap catalyst 13 largely increases. Even if half of the NOx discharge amount is discharged through the bypass passage 13A without being trapped, the trapping period is doubled, so the low temperature NOx trap catalyst 13 can trap an NOx amount exceeding the NOx amount which escapes from the bypass passage 13A.

Further, the NOx discharge amount increases as the load and rotation speed of the engine 1 increase. The lengthening of the period during which NOx can be trapped also means there is an increased probability that this high speed, high load state will lie within the period when NOx can be trapped.

As a result, the low temperature NOx trap catalyst 13 can trap a larger amount of NOx than if it was attempted to treat the whole amount of the exhaust gas. This embodiment is effective when it is desired to trap the largest possible amount of NOx using a low temperature NOx trap catalyst of small capacity.

Modifications and variations of the embodiments described above will occur to those skilled in the art, in light of the above teachings, as defined in the appended claims.

The embodiments of this invention in which an exclusive property or privilege is claimed are defined as follows:

## Claims

**1.** An exhaust purification device for purifying exhaust gas discharged from an internal combustion engine (1) to an exhaust passage (12) thereof, comprising:

> a low temperature nitrogen oxide trap catalyst (13) disposed in the exhaust passage (12), the nitrogen oxide trap catalyst (13) trapping nitrogen oxides and moisture in exhaust gas at a first temperature range and releasing trapped nitrogen oxides at a second temperature range higher than the first temperature range,
> **characterized by**
> a moisture amount regulating means (13A, 14) which regulates a moisture inflow amount of the nitrogen oxide trap catalyst (13) within a range corresponding to 0.7% to 1.3% of exhaust gas when the temperature of the catalyst resides in the first temperature range, as a consequence,
> a trapping amount of nitrogen oxides by the catalyst (13) being lowered as a trapping amount of moisture increases,
> a boundary between the first temperature range and the second temperature range being lower as a moisture content of exhaust gas during a nitrogen oxide trapping process is lower.

**2.** The exhaust purification device as defined in Claim 1, wherein the nitrogen oxide trap catalyst (13) comprises a trapping component wherein a noble metal is supported only on ceria.

**3.** The exhaust purification device as defined in Claim 1, wherein the nitrogen oxide trap catalyst (13) comprises a zeolite.

**4.** The exhaust purification device as defined in Claim 3, wherein the nitrogen oxide trap catalyst (13) further comprises a noble metal which promotes reduction of nitrogen oxides.

**5.** The exhaust purification device as defined in any of Claim 1 through Claim 4, wherein the moisture amount regulating means (13A,14) has a moisture trapping capacity to reduce the moisture content of exhaust gas to a value which causes the boundary to be located at 200°C.

**6.** The exhaust purification device as defined in any of Claim 1 through Claim 5, wherein the moisture amount regulating means (13A,14) comprises a moisture trapping agent comprising a zeolite or alumina.

**7.** The exhaust purification device as defined in Claim 6, wherein the moisture amount regulating means (13A,14) comprises a bypass passage (14A) which bypasses the moisture trapping agent and leads a part of the exhaust gas in the exhaust passage to the nitrogen oxide trap catalyst.

**8.** The exhaust purification device as defined in any of Claim 1 through 7, wherein the exhaust purification device further comprises a second nitrogen oxide trap catalyst (15) installed downstream of the first nitrogen oxide trap catalyst (13) in the exhaust passage (12) and having a function to trap nitrogen oxides in the exhaust gas at a higher temperature than the first nitrogen oxide trap catalyst (13).

**9.** The exhaust purification device as defined in any of Claim 1 through Claim 8, wherein the exhaust purification device further comprises a sensor (16) which detects a temperature of the nitrogen oxide trap catalyst (13), a mechanism (5) which adjusts an air-fuel ratio of an air-fuel mixture burnt by the engine (1), and a programmable controller (7) programmed to control the mechanism (5) to cause the air-fuel ratio to be a rich air-fuel ratio after the temperature of the nitrogen oxide trap catalyst (13) has reached a predetermined temperature.

**10.** The exhaust purification device as defined in Claim 1, wherein the moisture amount regulating means (13A,14) comprises a bypass passage (13A) which bypasses the nitrogen oxide trap catalyst (13) to prevent a part of exhaust gas containing moisture in the exhaust passage (12) from flowing into the catalyst (13).

## Patentansprüche

**1.** Abgasreinigungsvorrichtung zum Reinigen von Abgas, das aus einem Verbrennungsmotor (1) in einen Abgaskanal (12) desselben ausgestoßen wird, wobei sie umfasst:

einen Niedrigtemperatur-Stickoxidfallen-Katalysator (13), der in dem Abgaskanal (12) angeordnet ist, wobei der Stickoxidfallen-Katalysator (13) Stickoxide und Feuchtigkeit in Abgas in einem ersten Temperaturbereich einfängt und eingefangene Stickoxide in einem zweiten Temperaturbereich, der höher ist als der erste Temperaturbereich, freigibt, **gekennzeichnet durch**,
eine Feuchtigkeitsmengen-Reguliereinrichtung, (13A, 14), die eine Menge einströmender Feuchtigkeit des Stickoxidfallen-Katalysators (13) innerhalb eines Bereiches reguliert, der 0,7 % bis 1,3 % Abgas entspricht, wenn die Temperatur des Katalysators in dem ersten Temperaturbereich liegt, so dass als Folge
eine Menge **durch** den Katalysator (13) eingefangener Stickoxide verringert wird, wenn eine Menge eingefangener Feuchtigkeit zunimmt,
eine Grenze zwischen dem ersten Temperaturbereich und dem zweiten Temperaturbereich niedriger ist, wenn ein Feuchtigkeitsgehalt von Abgas während eines Stickoxid-Einfangprozesses niedriger ist.

**2.** Abgasreinigungsvorrichtung nach Anspruch 1, wobei der Stickoxidfallen-Katalysator (13) eine Einfangkomponente umfasst, bei der ein Edelmetall nur von Cerdioxid getragen wird.

**3.** Abgasreinigungsvorrichtung nach Anspruch 1, wobei der Stickoxidfallen-Katalysator (13) ein Zeolith umfasst.

**4.** Abgasreinigungsvorrichtung nach Anspruch 3, wobei der Stickoxidfallen-Katalysator (13) des weiteren ein Edelmetall umfasst, das Reduktion von Stickoxiden fördert.

**5.** Abgasreinigungsvorrichtung nach einem der Ansprüche 1 bis 4, wobei die Feuchtigkeitsmengen-Reguliereinrichtung (13A, 14) eine Feuchtigkeitseinfangkapazität aufweist, durch die der Feuchtigkeitsgehalt des Abgases auf einen Wert reduziert wird, der bewirkt, dass sich die Grenze bei 200 °C befindet.

**6.** Abgasreinigungsvorrichtung nach einem der Ansprüche 1 bis 5, wobei die Feuchtigkeitsmengen-Reguliereinrichtung (13A, 14) einen Feuchtigkeitseinfang-Wirkstoff umfasst, der ein Zeolith oder Aluminiumoxid umfasst.

**7.** Abgasreinigungsvorrichtung nach Anspruch 6, wobei die Feuchtigkeitsmengen-Reguliereinrichtung (13A, 14) einen Umgehungskanal (14A) umfasst, der den Feuchtigkeitseinfang-Wirkstoff umgeht und einen Teil des Abgases in dem Abgaskanal zu dem Stickoxidfallen-Katalysator leitet.

**8.** Abgasreinigungsvorrichtung nach einem der Ansprüche 1 bis 7, wobei die Abgasreinigungsvorrichtung des weiteren einen zweiten Stickoxidfallen-Katalysator (15) umfasst, der stromab von dem ersten Stickoxidfallen-Katalysator (13) in dem Abgaskanal (12) installiert ist und dazu dient, Stickoxide in dem Abgas bei einer höheren Temperatur als der erste Stickoxidfallen-Katalysator (13) einzufangen.

**9.** Abgasreinigungsvorrichtung nach einem der Ansprüche 1 bis 8, wobei die Abgasreinigungsvorrichtung des weiteren einen Sensor (16), der eine Temperatur des Stickoxidfallen-Katalysators (13) erfasst, einen Mechanismus (5), der ein Luft-Kraftstoff-Verhältnis eines durch den Motor (1) verbrannten Luft-Kraftstoff-Gemischs einstellt, sowie eine programmierbare Steuereinheit (7) umfasst, die so programmiert ist, dass sie den Mechanismus (5) so steuert, dass das Luft-Kraftstoff-Verhältnis ein fettes Luft-Kraftstoff-Verhältnis ist, nachdem die Temperatur des Stickoxidfallen-Katalysators (13) eine vorgegebene Temperatur erreicht hat.

**10.** Abgasreinigungsvorrichtung nach Anspruch 1, wobei die Feuchtigkeitsmengen-Reguliereinrichtung (13A, 14) einen Umgehungskanal (13A) umfasst, der den Stickoxidfallen-Katalysator (13) umgeht, um zu verhindern, dass ein Teil des Abgases, der Feuchtigkeit enthält, in dem Abgaskanal (12) in den Katalysator (13) hineinströmt.

## Revendications

1. Dispositif de purification d'échappement destiné à purifier des gaz d'échappement évacués d'un moteur à combustion interne (1) vers un passage d'échappement (12) de celui-ci, comprenant :

   un catalyseur piège d'oxyde d'azote à basse température (13) disposé dans le passage d'échappement (12), le catalyseur piège d'oxyde d'azote (13) piégeant les oxydes d'azote et l'humidité dans les gaz d'échappement à une première gamme de température et libérant les oxydes d'azote piégés à une seconde gamme de température plus élevée que la première gamme de température,
   **caractérisé par**
   un moyen de régulation de quantité d'humidité (13A, 14) qui régule une quantité d'entrée d'humidité du catalyseur piège d'oxyde d'azote (13) dans une gamme correspondant à 0,7 % à 1,3 % des gaz d'échappement lorsque la température du catalyseur réside dans la première gamme de température, comme conséquence,
   une quantité de piégeage des oxydes d'azote par le catalyseur (13) étant abaissée à mesure qu'une quantité de piégeage d'humidité augmente,
   une frontière entre la première gamme de température et la seconde gamme de température étant inférieure à mesure qu'une teneur en humidité des gaz d'échappement pendant un processus de piégeage d'oxyde d'azote est inférieure.

2. Dispositif de purification d'échappement selon la revendication 1, dans lequel le catalyseur piège d'oxyde d'azote (13) comprend un composant de piégeage dans lequel un métal noble est supporté uniquement sur de l'oxyde de cérium.

3. Dispositif de purification d'échappement selon la revendication 1, dans lequel le catalyseur piège d'oxyde d'azote (13) comprend une zéolite.

4. Dispositif de purification d'échappement selon la revendication 3, dans lequel le catalyseur piège d'oxyde d'azote (13) comprend en outre un métal noble qui favorise une réduction des oxydes d'azote.

5. Dispositif de purification d'échappement tel que défini dans la revendication 1 à la revendication 4, dans lequel le moyen de régulation de quantité d'humidité (13A, 14) a une capacité de piégeage d'humidité pour réduire la teneur en humidité des gaz d'échappement à une valeur qui place la frontière à 200°C.

6. Dispositif de purification d'échappement tel que défini dans l'une quelconque des revendications 1 à 5, dans lequel le moyen de régulation de quantité d'humidité (13A, 14) comprend un agent de piégeage d'humidité comprenant une zéolite ou de l'alumine.

7. Dispositif de purification d'échappement tel que défini dans la revendication 6, dans lequel le moyen de régulation de quantité d'humidité (13A, 14) comprend un passage de contournement (14A) qui contourne l'agent de piégeage d'humidité et achemine une partie du gaz d'échappement dans le passage d'échappement vers le catalyseur piège d'oxyde d'azote.

8. Dispositif de purification d'échappement tel que défini dans l'une quelconque des revendications 1 à 7, dans lequel le dispositif de purification d'échappement comprend en outre un second catalyseur piège d'oxyde d'azote (15) installé en aval du premier catalyseur piège d'oxyde d'azote (13) dans le passage d'échappement (12) et ayant une fonction de piéger les oxydes d'azote dans les gaz d'échappement à une température plus élevée que le premier catalyseur piège d'oxyde d'azote (13).

9. Dispositif de purification d'échappement tel que défini dans l'une quelconque des revendications 1 à 8, dans lequel le dispositif de purification d'échappement comprend en outre un capteur (16) qui détecte une température du catalyseur piège d'oxyde d'azote (13), un mécanisme (5) qui ajuste un rapport air-carburant d'un mélange air-carburant brûlé par le moteur (1) et une unité de commande programmable (7) programmée pour commander le mécanisme (5) pour amener le rapport air-carburant à être un rapport air-carburant riche après que la température du catalyseur piège d'oxyde d'azote (13) a atteint une température prédéterminée.

**10.** Dispositif de purification d'échappement selon la revendication 1, dans lequel la quantité de régulation de quantité d'humidité (13A, 14) comprend un passage de contournement (13A) qui contourne le catalyseur piège d'oxyde d'azote (13) pour empêcher une partie des gaz d'échappement contenant de l'humidité dans le passage d'échappement (12) de circuler dans le catalyseur (13).

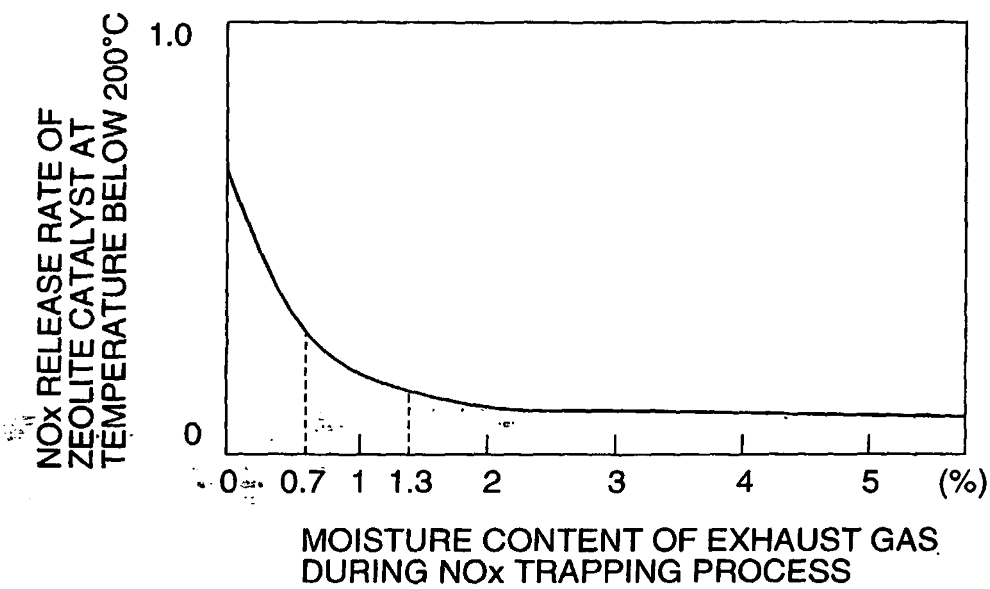
NOx RELEASE RATE OF ZEOLITE CATALYST AT TEMPERATURE BELOW 200°C
1.0
0
0
0.7
1
1.3
2
3
4
5
(%)
MOISTURE CONTENT OF EXHAUST GAS DURING NOx TRAPPING PROCESS

FIG. 1

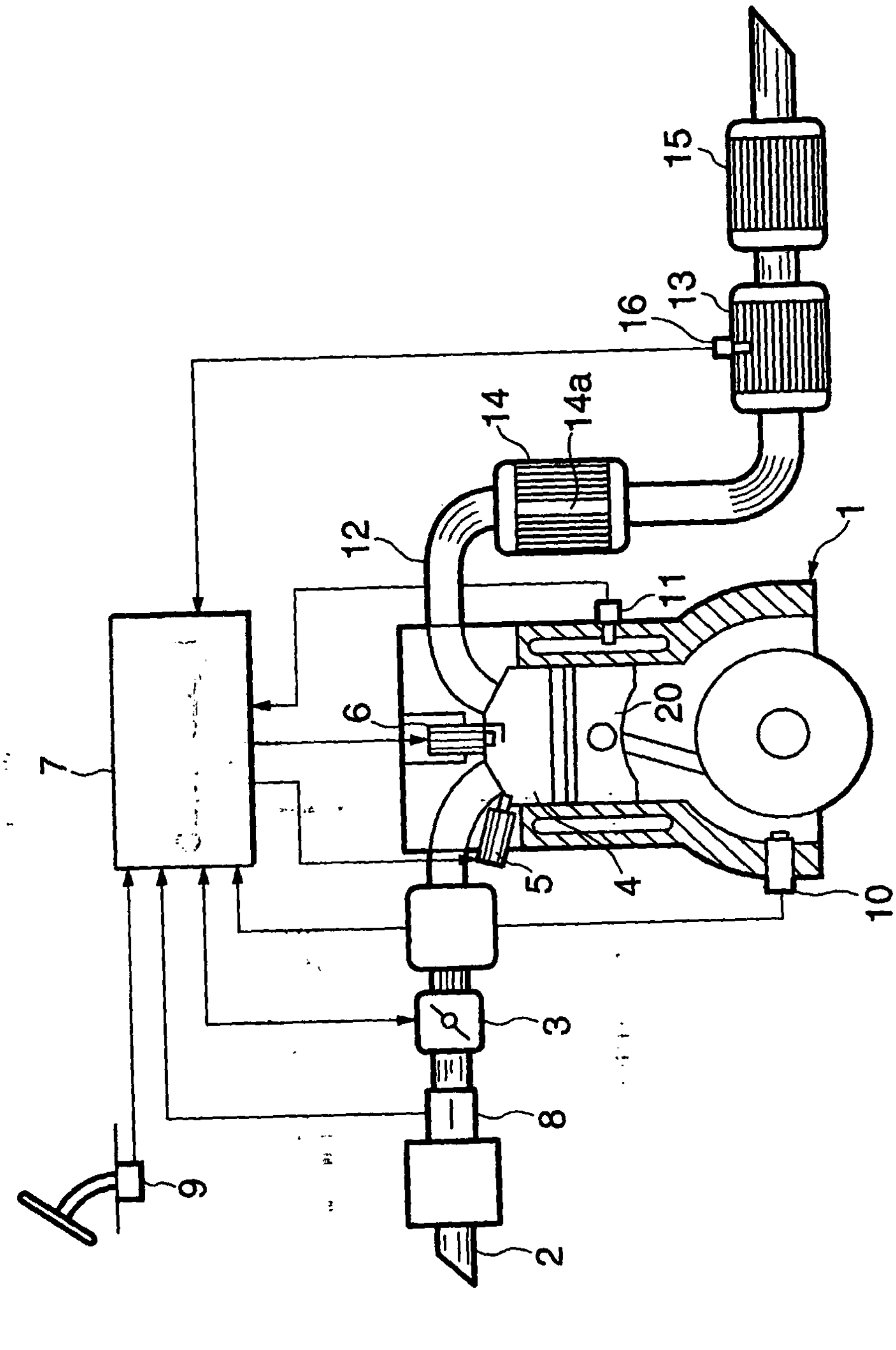


FIG. 2

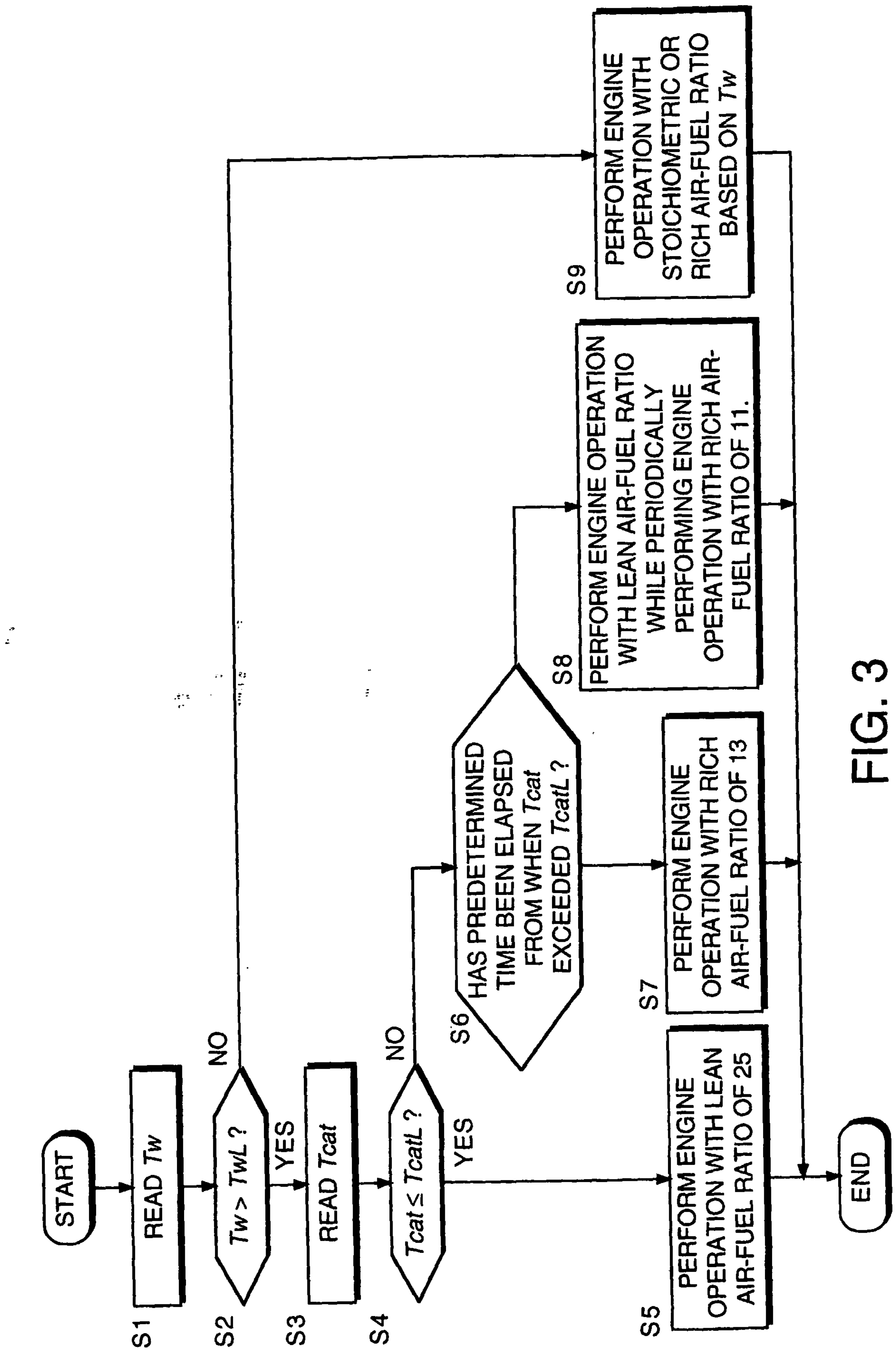
START
S1
READ Tw
S2
Tw > TwL ?
YES
NO
S3
READ Tcat
S4
Tcat ≤ TcatL ?
YES
NO
S5
PERFORM ENGINE OPERATION WITH LEAN AIR-FUEL RATIO OF 25
S6
HAS PREDETERMINED TIME BEEN ELAPSED FROM WHEN Tcat EXCEEDED TcatL ?
S7
PERFORM ENGINE OPERATION WITH RICH AIR-FUEL RATIO OF 13
S8
PERFORM ENGINE OPERATION WITH LEAN AIR-FUEL RATIO WHILE PERIODICALLY PERFORMING ENGINE OPERATION WITH RICH AIR-FUEL RATIO OF 11.
S9
PERFORM ENGINE OPERATION WITH STOICHIOMETRIC OR RICH AIR-FUEL RATIO BASED ON Tw
END

FIG. 3

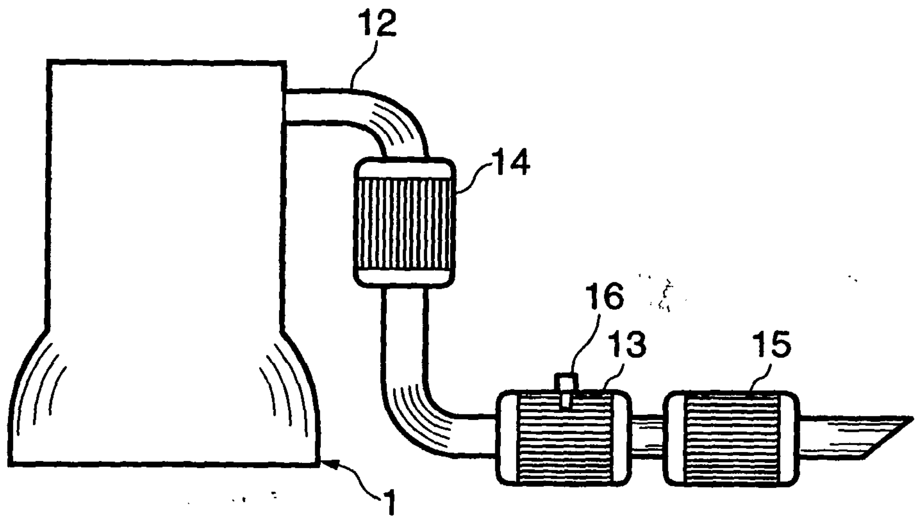


FIG. 4

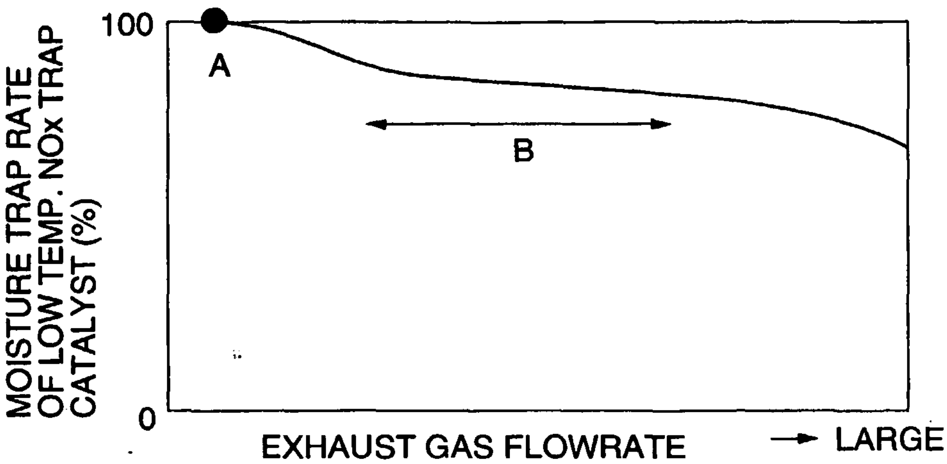
100
0
A
B
MOISTURE TRAP RATE
OF LOW TEMP. NOx TRAP
CATALYST (%)
EXHAUST GAS FLOWRATE
LARGE

FIG. 5

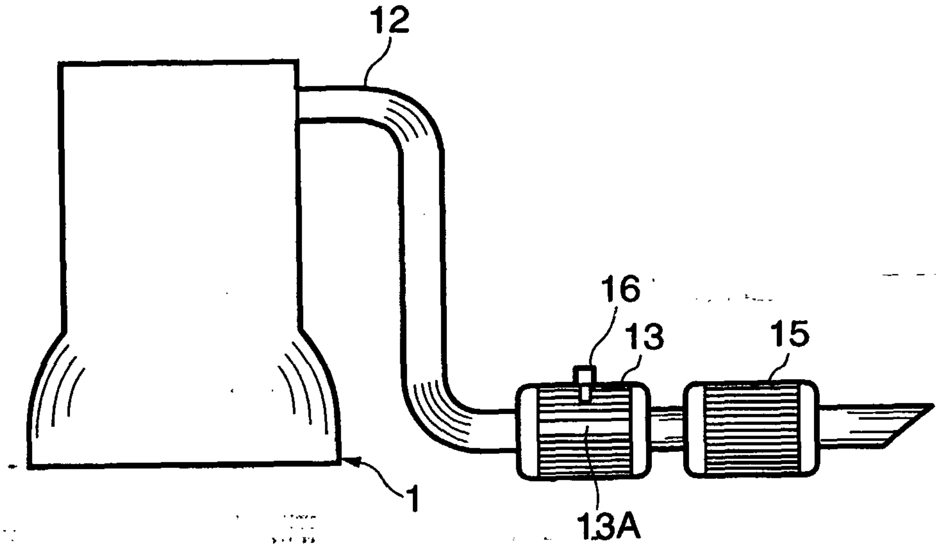


FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5552129 A
- EP 0774054 B1